# EUROPEAN PATENT APPLICATION

(11) **EP 1 783 051 A1**
(43) Date of publication of application: **09.05.2007**
(21) Application number: 06022654.5
(22) Date of filing: 30.10.2006
(51) Int. Cl.: B64G 1/22, B64G 1/66

(54) **Combination actuator latch mechanism**

(30) Priority: 03.11.2005 US 265887
(71) Applicant: Northrop Grumman Space & Mission Systems Corp., Los Angeles CA 90067-2199 (US)
(72) Inventor: Thomson, Mark W., Ventura CA 93003 (US)
(74) Representative: Schmidt, Steffen J.

(57) **Abstract**

A hinge for a boom associated with a spacecraft antenna or other payload. The boom hinge includes two hinge bodies (34,36) and at least three links (56,60,64), where one of the links is a drive link (56). The resulting hinge is an N + 4 bar linkage. An actuator rotates the drive link so that the other links wrap around it, and the next link in the series of links acts as a drive link as the links get wrapped around the primary drive link. At the end of the deployment, the hinge precisely emulates the classic four-bar over-center latch behavior. This allows any hinge-offset distance between the hinge bodies when stowed in a larger hinge rotation angle without structural compromises.

## Description

### BACKGROUND OF THE INVENTION

### 1. Field of the Invention

This invention relates generally to a hinge for a spacecraft boom for an antenna or other payload and, more particularly, to a boom hinge for a spacecraft antenna or other payload, where the boom hinge includes at least three links to form a five or more bar linkage.

### 2. Discussion of the Related Art

Spacecraft usually employ various types of structures, such as reflectors, antenna arrays, sensors, etc., that must be deployed away from the spacecraft on a boom when the spacecraft is on orbit or in space. These booms typically employ one or more hinges that allow the boom and the structure to be folded or stowed into the spacecraft envelope or fairing during launch, and then be unfolded in space to the deployed position. In certain designs for larger structures, such as antenna reflectors, the boom and hinges are very robust to provide the desired pointing stiffness so that the structure remains pointed in the proper direction for a particular mission requirement. The hinges for these types of boom designs typically are "preloaded" in the deployed position so that disturbances on the spacecraft or boom do not affect the linearity of the pointing of the structure. Various techniques are known in the art for unfolding or deploying the boom, including the use of motors, preloaded springs and other types of actuators.

A certain class of boom hinges are "clam-shell" designs that include two hinge halves. These boom hinges typically autonomously rotate from the stowed position when the antenna is in the spacecraft for launch to the deployed position when the spacecraft is in space. This requires very high deployed preloads that are applied centrally between the hinge halves. This typically requires a mechanism separate from the deployment actuator that will redundantly latch and provide the needed preload, such as some type of high-force latch. The known two-link over-center or "suitcase latch" type design can be configured to both centrally drive and latch the two halves of a clam-shell type hinge. The result is a simple four-bar linkage that is completely reversible in a direction of operation.

The above-described antenna boom hinge has a problem in that if the boom hinge has a large rotation angle, for example 180°, from the stowed position to the deployed position, the links have to be so long that they need to pass through slots provided in the boom and hinge body wall when they are rotated through the deployment sequence. These slots reduce the structural integrity of the hinge, possibly to an unacceptable level. Also, the length of the links must be further increased with a corresponding decrease in efficiency if the boom pieces need to be spaced apart when stowed, i.e., if there is a significant offset between the hinge line and the boom and hinge center line. It would be desirable to provide a hinge for a spacecraft boom that provided the structural integrity and robustness in a compact and deployable design beyond those hinges currently existing in the art.

### SUMMARY OF THE INVENTION

In accordance with the teachings of the present invention, a hinge for a boom associated with a spacecraft antenna or other payload is disclosed. The boom hinge includes two hinge bodies and at least three links, where one of the links is a drive link. The resulting hinge is an N + four bar linkage. An actuator rotates the drive link so that the other links wrap around it. The next link in the series of links acts as a drive link as the links get wrapped around the primary drive link. At the end of the deployment, the hinge precisely emulates the classic four-bar over-center latch design. This allows any hinge offset distance between the hinge bodies when stowed in a larger hinge rotation angle without structural compromises.

Additional advantages and features of the present invention will become apparent from the following description and appended claims, taken in conjunction with the accompanying drawings.

### BRIEF DESCRIPTION OF THE DRAWINGS

Figure 1 is a perspective view of a spacecraft including a deployed reflector on a boom, where the boom includes at least one boom hinge, according to an embodiment of the present invention;

Figures 2-6 are cross-sectional views of a boom hinge applicable to be used in the spacecraft shown in figure 1 between a stowed position in figure 2 and a deployed position in figure 6; and

Figures 7-10 are cross-sectional views of a boom hinge applicable to be used in the spacecraft shown in figure 1 between a stowed position shown in figure 7 and a deployed position shown in figure 10.

### DETAILED DESCRIPTION OF THE EMBODIMENTS

The following discussion of the embodiments of the invention directed to a hinge for a boom on a spacecraft is merely exemplary in nature and is in no way intended to limit the invention or its applications or uses. For example, the hinge may have other applications beyond spacecraft applications.

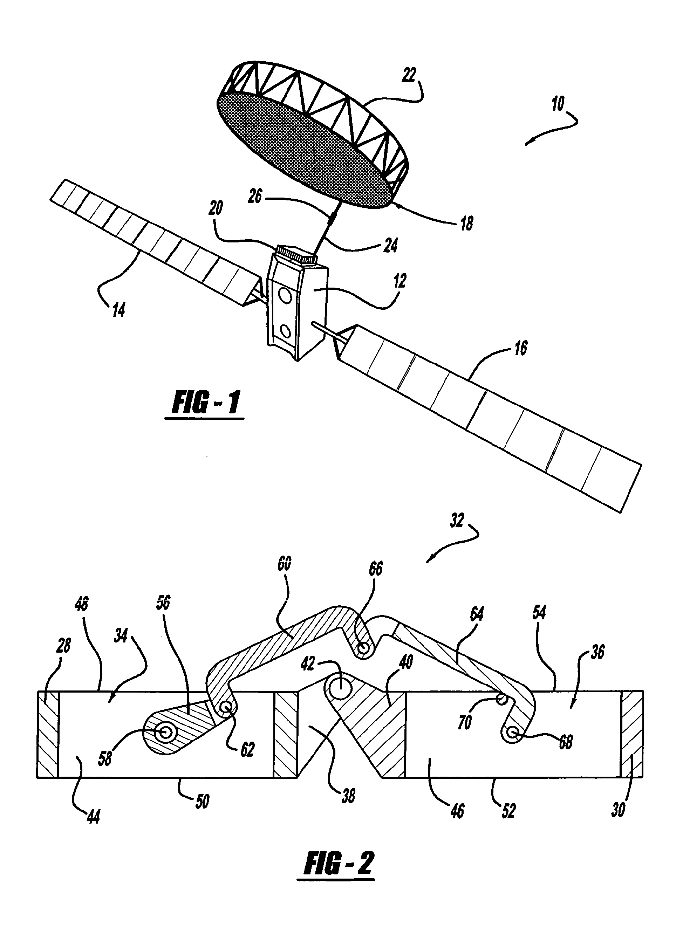

Figure 1 is a perspective view of a communications spacecraft 10 including a spacecraft body 12 and solar arrays 14 and 16 mounted to the body 12 that have been extended or deployed. The spacecraft 10 further includes an antenna system having an array of antenna feeds 20 mounted to the spacecraft body 12. The antenna system further includes an antenna reflector 18 configured on a truss 22, and connected to the spacecraft body 12 by a boom 24. Signals from earth received by the reflector 18 are directed to the antenna feeds 20, and signals transmitted by the antenna feeds 20 are directed towards the reflectors 18 to be transmitted to earth. The operation of a communications satellite of this type is well understood in the art, and need not be discussed in detail here for a proper understanding of the invention.

When the spacecraft 10 is launched from earth in a rocket fairing or on the shuttle, the reflector 18 is folded or stowed into a launch envelope within a confined space. When the spacecraft 10 is on orbit, the reflector 18 is deployed on the boom 24 by the articulation of a plurality of hinges depending on the particular design. Particularly, the boom 24 typically includes one or more hinges 26 that provide the deployment, structural integrity, preloading and pointing stiffness necessary for the reflector 18.

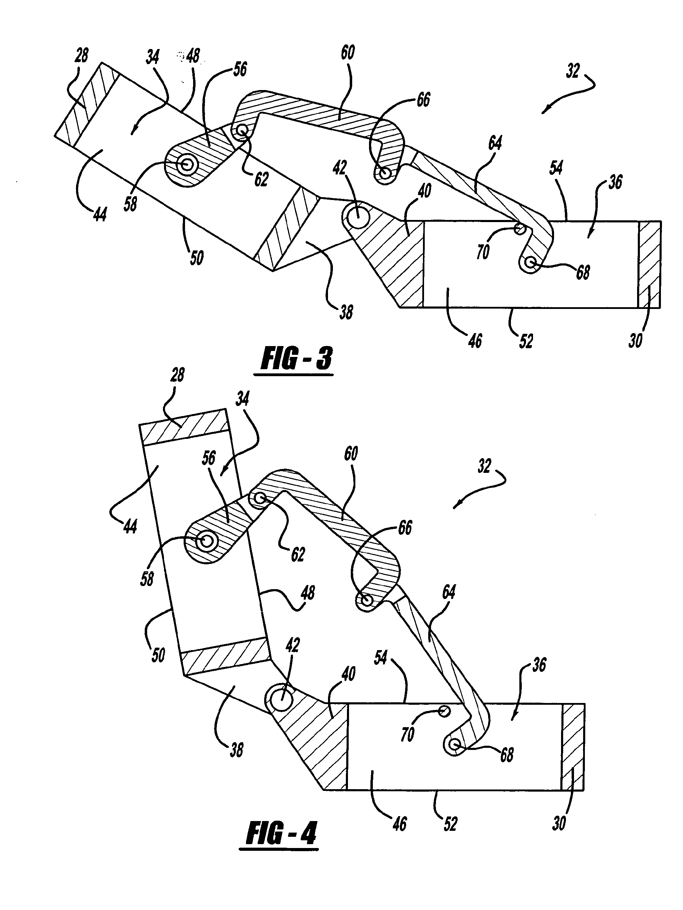

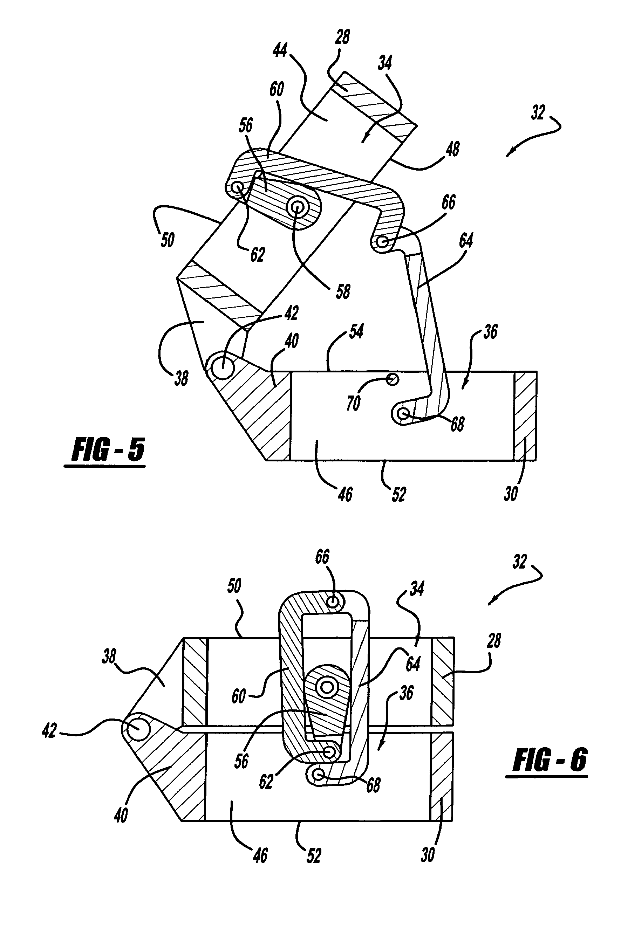

Figures 2-6 are cross-sectional views of a five-bar linkage hinge assembly 32, according to an embodiment of the present invention, applicable to be used for the hinge 26 to extend or deploy the boom 24. Figure 2 shows the hinge assembly 32 in a stowed position during launch of the spacecraft 10, and figure 6 shows the hinge assembly 32 in a deployed position as it would be in figure 1 in the on orbit position. Figures 3-5 show the hinge assembly 32 in sequential states between the stowed position and the deployed position.

The hinge assembly 32 includes a first hinge body 34 and a second hinge body 36 having side walls 28 and 30, respectively, defining chamber halves 44 and 46 therein. When the hinge assembly 32 is in the deployed position, the hinge bodies 34 and 36 are closed so that the chamber halves 44 and 46 combine to define a single chamber in which the hinge links are enclosed, as will be discussed below. The hinge body 34 includes a hinge tab 38 extending from the sidewall 28 and the hinge body 36 includes a hinge tab 40 extending from the sidewall 30. The hinge tabs 38 and 40 are pivotally coupled together by a hinge pin 42 that is aligned with inside surfaces 48 and 54 of the hinge bodies 34 and 36, respectively, as shown. The hinge tabs 38 and 40 may be a series of spaced apart tabs along the length of the hinge bodies 34 and 36, where the hinge pin 42 extends through all of the tabs 38 and 40. The length of the tabs 38 and 40 or the distance between the link pin 42 and the respective hinge body 34 and 36 defines the "offset" of the hinge assembly 32. Some hinge assembly designs for a particular application may require that the hinge offset be significantly large, which presents certain design problems, as will be discussed below.

A boom piece (not shown) will be coupled to an end 50 of the hinge body 34 and a boom piece (not shown) will be coupled to an end 52 of the hinge body 36, so that the boom pieces are adjacent to each other when the reflector 18 is in the stowed position. In one embodiment, the coupling between the hinge body and the respective boom piece is a "cup and cone" design, well known to those skilled in the art. The boom pieces can be made of any suitable material such as metal, graphite, composite, etc., and can be secured to the hinge bodies 34 and 36 by any suitable technique, such as rivets, bolts, adhesive, etc. Likewise, the hinge bodies 34 and 36 can be made of any suitable rigid material, such as aluminum, composites, etc.

The hinge assembly 32 includes a short drive link 56 rotatably coupled to the hinge body 34 by a drive shaft 58. The hinge assembly 32 further includes a first U-shaped link 60 pivotally coupled to an end of the drive link 56 opposite to the drive shaft 58 by a link pin 62. The hinge assembly 32 further includes a second U-shaped link 64 pivotally coupled to an end of the first link 60 opposite to the link pin 62 by a link pin 66, and pivotally coupled to the hinge body 36 by a link pin 68 opposite to the link pin 66, as shown. The second link 64 is positioned against a support pin 70 mounted to the hinge body 36 when the hinge assembly 32 is in the stowed position. The combination of the three links 56, 60 and 64 and the two hinge bodies 34 and 36 define the five-bar linkage.

When the reflector 18 is deployed, a motor (not shown), or some other suitable actuation device, rotates the drive shaft 58 in a counter-clockwise direction. As the drive link 56 is rotated, the first link 60 pivots on the link pins 62 and 66 so that the hinge body 34 pivots on the hinge pin 42 in a clockwise direction, as shown in figure 3. As the drive shaft 58 continues to rotate, the hinge body 34 will continue to rotate in a clockwise direction, and the second link 64 will lift off the support pin 70, as shown in figure 4. As the drive link 56 continues to rotate, it will eventually contact the first link 60, and be folded parallel to it, making the first link 60 the drive link, as shown on figure 5. Eventually, the first link 60 will fold inside of the second link 64 so that the drive link 56 is positioned between the links 60 and 64 and the hinge assembly 32 is in the deployed position, as shown in figure 6. The orientation of the link2 102 and 106 is "over" top dead center in the deployed position to provide the preload. In the deployed configuration, the boom pieces would extend along a common axis.

By providing more links in the hinge assembly 32 than the number of links used in the prior art, the deployed configuration of the links 56, 60 and 64 take up a smaller area, and are confined within the chamber defined by the chamber halves 44 and 46. Thus, the links 56, 60 and 64 do not need to be as long, so that slots do not need to be formed in the sidewalls 28 and 30 of hinge bodies 34 and 36 or in the boom pieces to accommodate the folded link assembly.

In altemate hinge designs according to the invention, the hinge offset may be required to be relatively large. This requires that the links be longer to accommodate the offset distance. In such a design, a five-bar linkage may not be enough because the links 60 and 64 may be too long where slots again would be required in the hinge bodies 34 and 36 and the boom pieces. Therefore, the present invention proposes other embodiments that are N + 4 bar linkage designs.

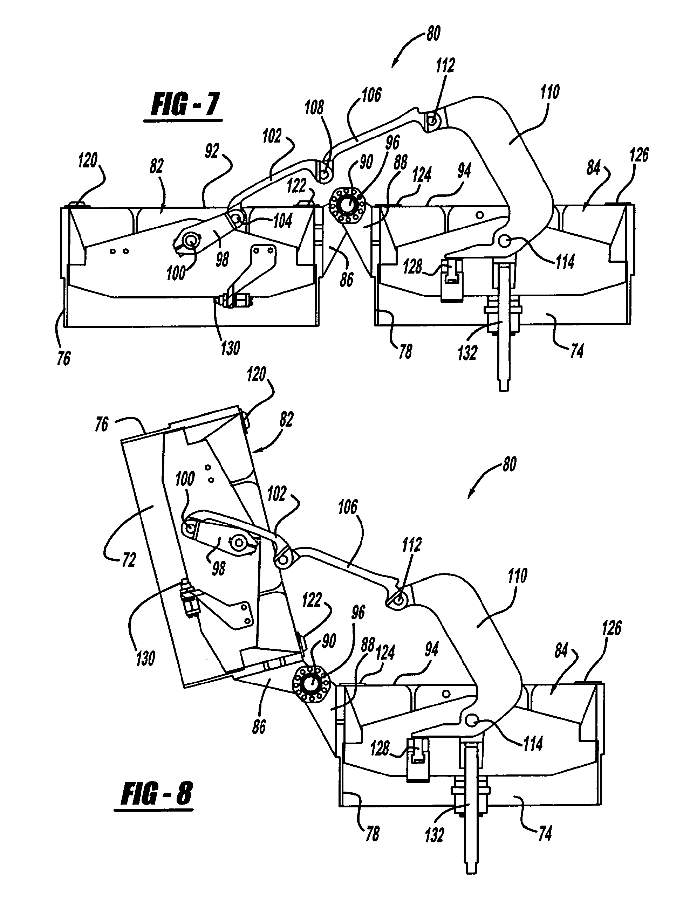

Figures 7-10 are cross-sectional views of a six-bar linkage hinge assembly 80, according to another embodiment of the present invention, where figure 7 shows the hinge assembly 80 in the stowed position and figure 10 shows the hinge assembly 80 in the deployed position. The hinge assembly 80 includes a first hinge body 82 and a second hinge body 84 having sidewalls 76 and 78, respectively, defining chamber halves 72 and 74. The hinge body 82 includes a hinge tab 86 and the hinge body 84 includes a hinge tab 88. The hinge tabs 86 and 88 are pivotally coupled together by a hinge pin 90 that is aligned with inside surface 92 of the hinge body 82 and inside surface 94 of the hinge body 84, as shown. A spring 96 is wrapped around the hinge pin 90 to provide tension between the hinge bodies 82 and 84 that prevents an outside force other than the actuator from rotating the hinge body 82.

The hinge assembly 80 includes a drive link 98 rotatably coupled to the hinge body 82 by a drive shaft 100. The hinge assembly 80 further includes a first U-shaped link 102 pivotally coupled to the drive link 98 by a link pin 104 opposite to the drive shaft 100. The hinge assembly 80 further includes a second U-shaped link 106 pivotally coupled to an end of the link 102 opposite to the link pin 104 by a link pin 108. The hinge assembly 80 further includes a third U-shaped link 110 pivotally coupled to an end of the link 106 opposite to the link pin 108 by a link pin 112, and pivotally coupled to the hinge body 84 opposite to the link pin 112 by a link pin 114. The link 110 is a more robust link to provide the structure required for the preload when the hinge assembly 80 is in the deployed position. The hinge body 82 includes nubs 120 and 122 that contact stops 124 and 126, respectively, on the hinge body 84 when the hinge assembly 80 is in the deployed position.

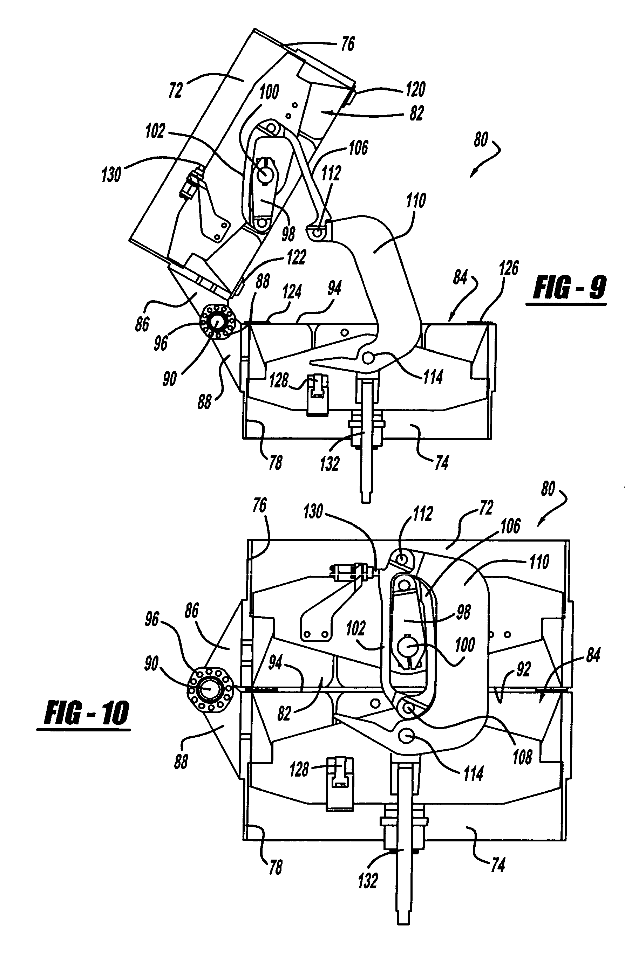

Figures 8 and 9 show the hinge assembly 80 in sequential states between the stowed position and the deployed position. When the motor rotates the drive shaft 100, the drive link 98 rotates in a counter-clockwise direction so that the first link 102 pivots on the link pin 104 and the second link 106 pivots on the link 112. Eventually, the drive link 98 will be positioned within and adjacent to the first link 102, as shown in figure 8. As the drive shaft 100 continues to rotate, the first link 102 becomes the drive link, and the second link 106 is folded adjacent to the first link 102, where the drive link 98 is positioned between the links 102 and 106, as shown in figure 9. As the drive shaft 100 rotates to the deployed position as shown in figure 10, the first link 102 will be positioned adjacent to and within the third link 110. The orientation of the third link 110 is "over" top dead center in the deployed position to provide the preload.

By increasing the number of links it is not necessary to provide slots in the sidewalls 76 and 78 for larger hinge offsets, and therefore the torsional stiffness of the hinge assembly can be increased. This allows the hinge bodies to be preloaded in the deployed position better suitable for the pointing requirements. In one design, it is the cup and cone joints between the boom pieces and the hinge bodies that are preloaded. The structure of the hinge bodies are stressed by the preload as a result of the links.

The hinge body 84 includes a stop 128, such as a set screw, that prevents the third link 110 from rotating on the link pin 114 in a counter-clockwise direction. Further, the hinge body 82 includes a switch 130 that turns the motor off by contacting the link 102 when the hinge assembly 80 is in the deployed state shown in figure 10. The hinge body 84 also includes a threaded adjustment mechanism 132 that adjusts the position of the hinge pin 114 along the axis of the boom in the deployed position to provide the proper preload on the hinge assembly 80 by the link 110.

The foregoing discussion discloses and describes merely exemplary embodiments of the present invention. One skilled in the art will readily recognize from such discussion, and from the accompanying drawings and claims, that various changes, modifications and variations can be made therein without departing from the spirit and scope of the invention as defined in the following claims.

## Claims

1. A hinge assembly comprising:
a first hinge body including at least one hinge tab;
a second hinge body including at least one hinge tab;
a hinge pin coupled to the hinge tabs so that the first and second hinge bodies are rotatably coupled together;
a drive shaft mounted to the first hinge body;
a drive link including a first end and a second end, said first end of the drive link being rigidly coupled to the drive shaft;
a first link including a first end and a second end, said first end of the first link being pivotally coupled to the second end of the drive link by a first link pin; and
a second link including a first end and a second end, said first end of the second link being pivotally coupled to the second end of the first link by a second link pin, wherein the first hinge body moves from a first position to a second position by rotating the drive shaft so that the drive link, the first link and the second link go from an extended position to a compact position where the drive link is positioned between the first and second links and the first hinge body is positioned in contact with the second hinge body.

2. The hinge assembly according to claim 1 wherein the first link and the second link are U-shaped links.

3. The hinge assembly according to claim 1 wherein the second end of the second link is pivotally coupled to the second hinge body by a third link pin so that the combination of the first hinge body, the second hinge body, the drive link, the first link and the second link define a five-bar linkage.

4. The hinge assembly according to claim 1 further comprising a third link including a first end and a second end, said first end of the third link being pivotally coupled to the second end of the second link by a third link pin and said second end of the third link being pivotally coupled to the second hinge body by a fourth link pin so that the combination of the first hinge body, the second hinge body, the drive link, the first link, the second link and the third link define a six-bar linkage.

5. The hinge assembly according to claim 4 wherein the third link is a structurally more robust link than the first and second links.

6. The hinge assembly according to claim 4 further comprising an adjustment device mounted to the second hinge body, said adjustment device adjusting the position of the fourth link pin.

7. The hinge assembly according to claim 1 wherein the drive link, the first link and the second link are oriented over top dead center relative to an axis of the hinge bodies when the hinge assembly is in the second position.

8. The hinge assembly according to claim 1 wherein the hinge pin is aligned with an inside surface of the hinge bodies.

9. The hinge assembly according to claim 1 further comprising a spring wound around the hinge pin, said spring providing torsional tension between the hinge bodies.

10. The hinge assembly according to claim 1 further comprising a switch mounted to the first hinge body, said switch preventing the drive shaft from rotating when the first hinge body reaches the second position.

11. The hinge assembly according to claim 1 wherein the hinge assembly is part of a boom on a spacecraft, said boom positioning a spacecraft structure wherein the first position is a stowed position for the structure and the second position is a deployed position for the structure.
